# EUROPEAN PATENT APPLICATION

(11) **EP 2 908 206 A1**
(43) Date of publication of application: **19.08.2015**
(21) Application number: 14154773.7
(22) Date of filing: 12.02.2014
(51) Int. Cl.: G05D 23/19, F24F 11/00

(54) **System, method and controller for regulation temperature**

(71) Applicant: E.ON Energie Deutschland GmbH, 80335 München (DE)
(72) Inventor: Degroot, Bastiaan, London NW1 8LH (GB); Carter, Jon, London NW1 2DX (GB); Holtzberg, Rachael, London NW1 2DX (GB); Ramachandran, Ramesh, London NW1 2DX (GB)
(74) Representative: Glawe, Delfs, Moll

(57) **Abstract**

The present invention relates to a method, a system and a controller for regulating the temperature within a defined space, e.g. a building or a room. The system (1) for regulating the temperature within a defined space (90), which is configured to carry out the method according to the invention, comprises means for measuring the temperature (11a-d, 12) at one or more locations within said defined space (90), means for heating and/or cooling (10a-d) the defined space, and a controller (2) for controlling the heating and/or cooling means (10a-d) depending on the temperature measured by the temperature measuring means (11a-d, 12) and a target temperature. The controller (2) according to the invention as used in the system (1) according to the invention comprises a scheduler (3) that is configured to set said target temperature to either a stand-by temperature or an actual presence temperature depending on predicted periods of presence of a user in the defined space (90), and a prediction module (4) for calculating predicted periods of presence of a user based on empirical values of actual presence of a user, wherein at least part of said empirical values are obtained from monitoring the arming and disarming of a security system (20) monitoring said defined space (90).

## Description

The present invention relates to a method, a system and a controller for regulating the temperature within a defined space, e.g. a building or a room.

It is common state of the art that temperature within a house or a room is regulated via a thermostat that is connected to a heating device, e.g. a radiator. The thermostat can be set to a desired temperature, which then activates the heating device until the actual temperature measured by the thermostat reaches the desired temperature it is set to. Afterwards, the heating device is only activated whenever the measured temperature falls below the desired temperature, the thermostat is set to.

Several disadvantage of this technology originate from the practical permanence of the setting of the desired temperature. The average user decides for a desired temperature once and sets the thermostat respectively. From that moment on, the house or room whose temperature is controlled by the thermostat is constantly heated to the desired temperature, whether or not the desired temperature level is actually required. For example, in homes during daytime, the desired temperature the thermostat is set to is usually not required since the residents are at their workplace etc. In contrast, office building usually should be heated to a desired temperature during office hours, while at night-time the temperature might be significantly lower.

With said basic thermostats, the disadvantage arises that the house or room is heated at times when it is not actually required. This leads to high expenses for heating and unnecessary environmental costs.

In order to overcome this disadvantage, improved thermostats have been proposed. One type of improved thermostat allows the user to manually set the desired temperature for predetermined time spans, e.g. every hour of the week. This allows the user to reduce the desired temperature for periods in time where he assumes not be at home. However, apart from the usually difficult programming of such thermostats, these cannot be easily adapted to a change in the behavioural pattern of a user or exceptional situations like holidays or being ill at home.

Another improved thermostat comprises one or more sensors to detect, whether a person is actually within reach of said sensors. Only if a user is detected the thermostat controls the temperature to equal the desired temperature. With further improvements, the thermostat might also be able to learn from past sensor measurements when a user can typically be expected to be in the area controlled by the thermostat. The thermostat can then preheated said area in due time before a user is expected to arrive.

The last-mentioned thermostats have the disadvantage that they usually require a vast number of sensors in order to allow a complete monitoring of the whole area that is to be controlled. For example, in a house, a sensor is required at least in every room to determine whether a user is at home or not. This vast number of sensors makes the system costly and requires considerable installation efforts.

It is one object of the present invention to provide a system, a method and a controller for regulating the temperature within a defined space that avoid or at least lessen the disadvantages of the state of the art.

This object is met by a system, a method and a controller according to the independent claims. Preferable embodiments are to be found in the dependent claims.

The present invention provides a system for regulating the temperature within a defined space, e.g. a house, comprising means for measuring the temperature at one or more locations within said defined space, means for heating and/or cooling the defined space, and a controller for controlling the heating and/or cooling means depending on the temperature measured by the temperature measuring means and a target temperature, wherein said controller comprises a scheduler that is configured to set said target temperature to either a stand-by temperature or an actual presence temperature depending on predicted periods of presence of a user in the defined space, and a prediction module for calculating predicted periods of presence of a user based on empirical values of actual presence of a user, wherein at least part of said empirical values are obtained from monitoring the arming and disarming of a security system monitoring said defined space via the respective interface.

The present invention further provides a controller for regulating the temperature within a defined space, e.g. a house, comprising interfaces for connection with means for measuring the temperature and means for heating and/or cooling to be situated within said defined space, wherein the controller is configured to receive measured temperatures from the means for measuring the temperature and to actuate the means for heating and/or cooling so that the measured temperatures meet a target temperature, the controller further comprising an interface for connection with a home security system to at least receive information on the status of the home security system in regard to arming and disarming, a scheduler that is configured to set the target temperature to either a stand-by temperature or an actual presence temperature depending on predicted periods of presence of a user in the defined space and a prediction module for calculating predicted periods of presence of a user based on empirical values of actual presence of a user, wherein at least part of said empirical values are obtained from monitoring the arming and disarming of a security system monitoring said defined space.

Furthermore, the invention provides a method for regulating the temperature within a defined space comprising measuring the actual temperature in the defined space and controlling means for heating and/or cooling the defined space for the measured temperature to equal a target temperature, wherein the target temperature is set to an actual presence temperature or a stand-by temperature based on predicted periods of presence of a user in the defined state, wherein said prediction is based on the empirical values of actual presence of a user at least partly obtained from monitoring the arming and disarming of a security system monitoring said defined space.

The present invention utilizes the status of the home security system as a source of information on whether a user is present in a defined space, e.g. a house, in order to detect patterns of periods of presence of a user and to calculate corresponding predictions therefrom. It has been found that such information coming from a home security system is very reliable and accurate regarding the actual presence of a user since users are usually very eager to activate such systems for security reasons whenever they are away. By using the status of the security system for temperature control, the user gets the additional benefit of an improved customization of the temperature control without having to operate or attend additional devices. Said customization relates to a better prediction of the presence of a user and according control of the temperature, which in turn generally leads to lower heating expenses and environmental costs.

Furthermore, the inventive system does not necessarily require sensors to be installed just for the purpose of detecting presence of a user in order to predict periods of presence of a user to be used for temperature control. Especially in places, where a security system is already installed, this can be easily enhanced to the claimed system, e.g. by simply installing the claimed controller only.

The term "defined space" as used herein encompasses these rooms and areas whose temperature is actually controlled by the means of the present invention. Usually, all rooms comprising means for heating and/or cooling that are controlled by the controller are part of the defined space. Such means can comprise radiators or air-conditioning units. While it is, of course, possible that said rooms also each comprise means for measuring the temperature, this is not essentially necessary as long as at least one means for measuring the temperature is present that allows sufficient evaluation of the temperature of said defined space, much like it is the case with state of the art thermostats. In many cases, the defined space may comprise all rooms of a house or any other building, all rooms of a flat in an apartment block or the rooms of an office, etc. However, the invention also relates to instances where the "defined space" comprises only a single room or a single hall.

"Target temperature" is the temperature the controller is trying to achieve by controlling the means for heating and/or cooling. In other words, the controller tries to equal the temperature measured by the respective means with the target temperature by controlling the means for heating and/or cooling accordingly. In case there are more than one means of measuring the temperature and/or means for heating and/or cooling, the controller might be configured to control the means for heating and/or cooling individually in respect to the individually measured temperatures. For example, if there are several rooms with at least one means for measuring the temperature and means for heating each, the controller might only activate the heating means in a room where the measured temperature is below target temperature for said room.

The target temperature might change over time. In respect to the present invention, the target temperature especially may switch between a "stand-by temperature" and an "actual presence temperature". The term "actual presence temperature" denotes the temperature, the user would like to have at times that he is actually present in the defined space. The "stand-by temperature" denotes the temperatures allowed during the remaining periods of time. The stand-by temperature does not necessarily consist of a specific set value for the temperature but may also be defined as a temperature range. The latter can reduce the need for an active controlling of the temperature and thus save energy.

Typical temperatures during periods of presence for residential and/or commercial premises can range from 17°C to 23°C depending on the actual use of a specific room, not including special category spaces like cooling chambers. The stand-by temperature might be freely chosen and defined as a temperature range. Preferably, the stand-by temperature is chosen as to requiring less heating and/or cooling energy than the actual presence temperature. However, in order to avoid any risk of mould formation and/or frost damages, the stand-by temperature might be set to be over 14°C or 5°C, respectively. Furthermore, it might be advisable not to have the stand-by temperature deviate from the actual presence temperature too much since then the reheating or re-cooling of the defined space when the target temperature switches from stand-by to actual presence temperature might be very energy consumptive and/or require an unsatisfactory long period of time.

Both, the actual presence temperature and the stand-by temperature may also vary depending on the time of day. For example, the actual presence temperature for a living room may be lower at night-time (e.g. 23:00 to 05:00) than at other times during the day.

The "prediction module" is preferably configured to record the times when the security system is armed or disarmed and can derive typical times of presence and absence therefrom. Preferably, these times are determined for each day of the week separately in order to accustom daily behaviour patterns, e.g. differences between workdays and weekends.

If the prediction module is provided with a list of "special days" e.g. bank holidays, the prediction module might use this list to take into account and/or predict a different behaviour pattern on such specific days, e.g. predict the behaviour pattern of a Sunday even though the actual day might nominally be a work day like Monday. The prediction module might be configured to receive such lists over a communication network, e.g. the Internet.

The controller may also be configured to set the target temperature directly based on the status of the security system and thus overriding the target temperature set by the scheduler. This allows the controller to accustom unexpected behaviour by the user, e.g. returning home early during a period where he is predicted to be absent. While the defined space might in case not be at the actual presence temperature on arrival of the user, the temperature control can try to reach said temperature quickly. On the other hand, the arming of the security system usually indicates the leaving of the user for a certain period of time. The controller might thus set the target temperature to stand-by temperature, even though the prediction according to the scheduler might indicate otherwise.

In a preferred embodiment, the controller is configured to take into account the warm-up or cool-down period required from the stand-by temperature or the measured temperature to the actual use temperature so that the actual use temperature is reached at the beginning of a predicted period of presence. If the controller can estimate the time required to bring the temperature from the measured temperature to the actual use temperature, it can control the means for heating and/or cooling so that the actual use temperature as target temperature is reached in time for the beginning of predicted periods of presence. In other words, by accounting for said warm-up or cool-down period, the controller might set the target temperature to the actual use temperature a certain amount of time before an actual predicted period of presence begins.

Even though not essentially necessary, it is also possible that the system according to the invention comprises one or more sensors to detect actual presence of a person in the defined space and the controller is configured to adapt the target temperature based on the sensor data and/or to provide said sensor data as empirical values of actual presence of a user to the prediction module. With such sensors, the prediction of periods of presence of a user can be improved. Furthermore, it is possible to fine-adjust the temperature control in individual areas within a defined space in view of the presence of the user in said individual areas. For example, in a house the system may learn by means of sensors which rooms are actually used by a user at what time of day and may adjust the temperature control accordingly.

Said sensors for detecting the presence of a person may also be coupled to the security system in order to trigger an alarm when the presence of a person is detected and the security system is armed. Alternatively or in addition, the security system may be coupled to the controller to relay any information on the presence of a person detected by the sensors of the security system whenever the security system is disarmed. In both cases, sensors or other means to detect the presence of a user can become dual use sensors for both the temperature control system and the security system. Whenever the security system is disarmed, the sensors can provide information on the presence of a user to the temperature control system, while they are used for security monitoring when the security system is armed.

The controller preferably provides a user interface to manually override the scheduler and to set the target temperature to the stand-by temperature, the actual presence temperature or any other desired temperature. Such an interface allows the system to accustom to exceptions in the behaviour pattern of a user, e.g. staying in during a period the prediction module predicted the user to be absent. Of course, the interface may also allow the user to set the stand-by temperature and/or the actual presence temperature to desired values and/or ranges. The interface might also provide the user with information on actual energy consumption data and developments, possibilities for further energy savings, etc.

In a preferred embodiment, said user interface is remotely accessible via communication network like the Internet or mobile networks (GSM, UMTS, LTE, etc.). With such a remote access the user can control the system from locations distant to the defined space and e.g. signal his arrival in the defined space in advance. In that case, the controller may set the target temperature to the actual presence temperature in due time so that the temperature is at the desired level when the user arrives, independent from the temperature setting by the scheduler.

The controller according the present invention is configured to be used in the inventive system. For further explanation on the controller it is thus referred to the above description of the inventive system.

For explanation of the method according to the present invention it is also referred to the remarks above. The inventive method and its preferred embodiments are readily apparent from the explanations of the inventive system that is suitable and/or configured for executing the inventive method.

The features, objects and advantages of the invention will become further apparent by the following exemplary description of preferred embodiments in conjunction with the accompanying drawings, which show:
- Figure 1: a schematic overview of a defined space equipped with a first embodiment of a system according to the invention;
- Figure 2: a schematic overview of the harnessing of the system according to figure 1; and
- Figure 3: exemplary control processes of the system according to figures 1 and 2.

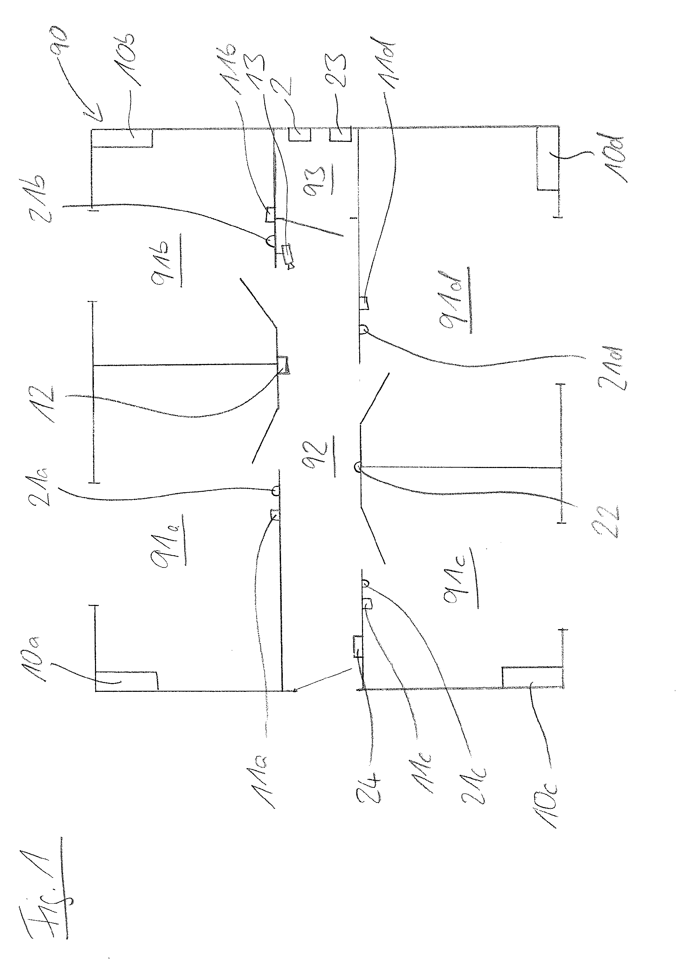

In figure 1, a defined space 90 that is equipped with a system 1 for regulating the temperature in said defined space 90 is depicted. The defined space 90 in this example is a flat comprising several rooms 91a-d that all lead off a corridor 92. Also included in the defined space 90 is a small storeroom 93.

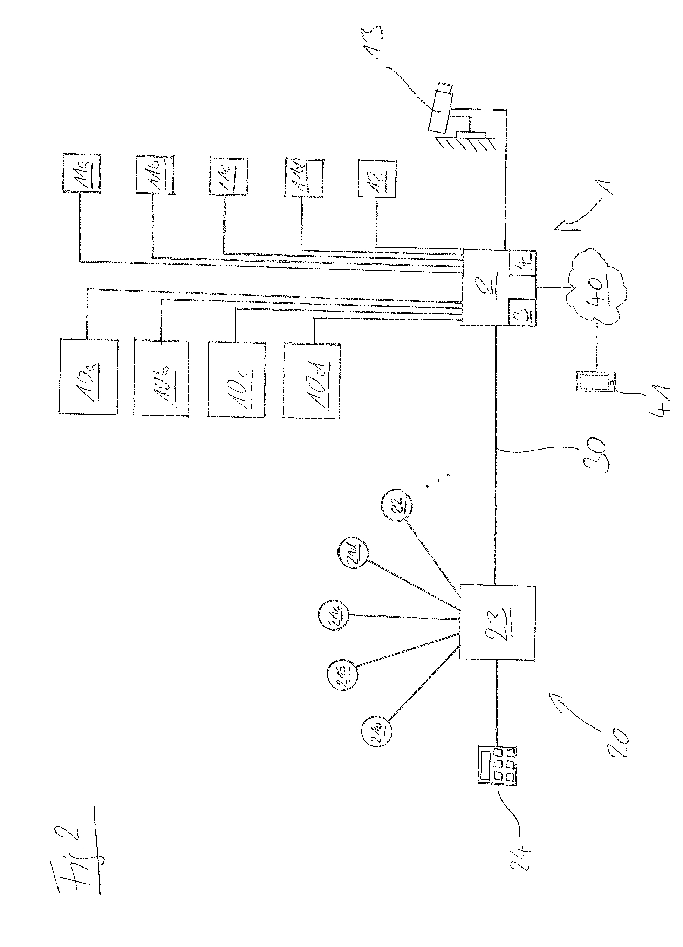

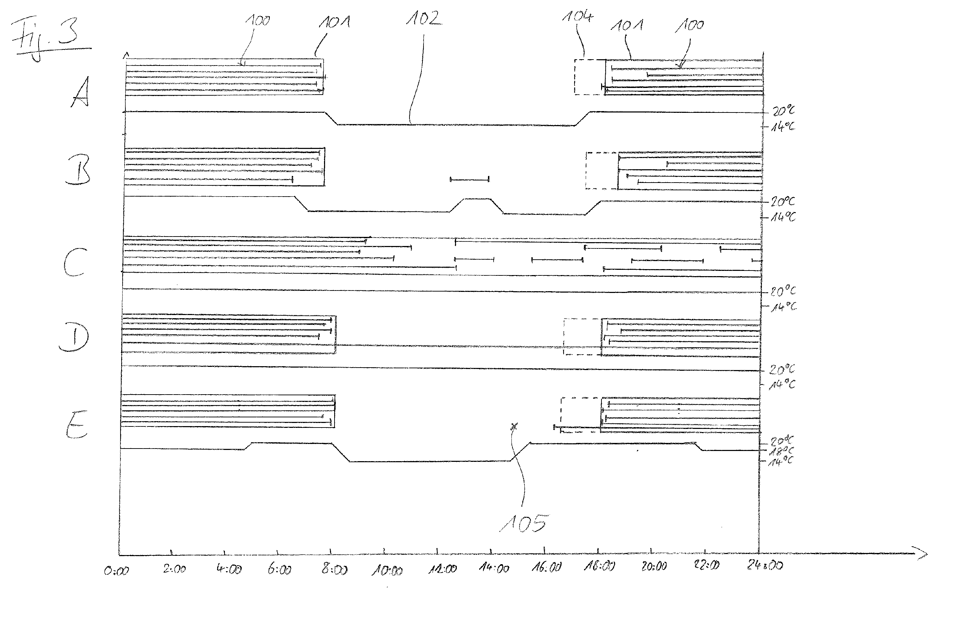

Each of the rooms 91a-d in this exemplary embodiment comprises a means for heating 10a-d, in this case, controllable radiators. Furthermore, means for measuring the temperature 11a-d, 12 are located in each room 91a-d and the corridor 92. The means for heating 10a-d and the means for measuring temperature 11a-d, 12 are connected to a controller 2. Additionally, a camera 13 that is monitoring the corridor 92 is also connected to the controller 2. The camera 13 can be used as a sensor for detecting the presence of a person within the field of view of the camera 13. The harnessing of the system 1 and the actual control rules of the controller 2 will be explained later in connection with figures 2 and 3.

The defined space 90 is also provided with a security system 20. The security system 20 comprises one security sensor 21a-d, 22 in each of the rooms 91a-d and the corridor 92. In this example, the security sensors 21a-d, 22 are motion detection sensors. Of course, additional and/or alternative security sensors, e.g. window breaking sensors or door opening sensors may be provided. The security sensors 21a-d, 22 are connected to a central controlling unit 23.

When the security system 20 is armed, the central controlling unit 23 can detect the presence of persons in the defined space 90 by means of the security sensors 21a-d, 22 and trigger an alarm. In order to arm and/or disarmed the security system 20, activation terminal 24 is provided near the exit of the defined space 90. Whenever the user leaves the defined space 90, i.e. his flat, he may arm the security system 20. On his return, the user can disarmed the security system 20 again via the activation terminal 24.

In figure 2, the harnessing of the system 1 for regulating the temperature as well as in the security system 20 is illustrated. For ease of understanding, the connections between two components of the systems 1, 20 depicted as individual wires. It is, however, possible to interconnect the components of the systems 1, 20 via a bus or network infrastructure, e.g. Ethernet or the like.

The controller 2 of the system 1 for regulating the temperature is connected to each means for heating 10a-d in each of the rooms 91a-d (cf. figure 1) and is configured to control the same. The controller 2 is also connected to the means for measuring the temperature 11a-d, 12 and configured to receive the measured temperature values. The controller 2 is capable of associating the means for heating 10a-d and the means for measuring the temperature 11a-d, 12 to individual rooms 91a-d and/or the corridor 92. Furthermore, the camera 13 is connected to the controller 2.

The central controlling unit 23 of the security system 20 is connected to each of the security sensors 21a-d, 22 as well as the activation terminal 24. The security system 20 can be armed or disarmed via the activation terminal 24. The security sensors 21a-d, 22 can detect e.g. the presence of a person. In case the security system 20 is armed, the detection of a presence of a person is considered a security breach and the controlling unit 23 triggers an alarm.

The central controlling unit 23 of the security system 20 and the controller 2 of the system 1 for regulating the temperature are connected by means of an interconnection 30. Via this interconnection 30, at least the controller 2 of the system 1 for regulating the temperature receives information on the arming and disarming of the security system 20. In addition, data from the security sensors 21a-d, 22, the means for measuring temperature 11a-d, 12 and/or the camera 13 may be relayed to that system, the sensors, camera(s) and/or other means are not directly connected to.

The controller 2 of the system 1 for controlling the temperature comprises a scheduler 3 and a prediction module 4. It is also connected to a communication network 40 and provides a user interface for remote access, e.g. via a mobile phone 41. In this interface, the user may set the various temperatures and influence the controller 2 as will be explained later.

The prediction module 4 is configured to calculate predicted periods of presence of a user based on empirical values of actual presence of a user. Said empirical values at least partly consist of the information regarding the arming and disarming of the security system 20 transmitted via the interconnection 30. Whenever the security system 20 is armed, the prediction module 4 will assume actual absence of the user. When the security system 20 is disarmed, the prediction module 4 might assume actual presence of the user. However, the actual presence of the user might be further verified with the help of the camera 13. It is thus possible that the prediction module 4 can detect the actual absence of a user, even though the security system 20 may not be armed.

Further information on the actual presence of a user within the defined space might also be obtained via the security sensors 21a-d, 22 of the security system 20. For this, motion detectors as security sensors 21a-d, 22 are particularly suitable. The respective information on the actual presence of the user is then relayed to the controller 2 of the system 1 for controlling the temperature or, more specifically, to the prediction module 4 via the interconnection 30. Depending on the security sensors 21a-d, 22 and the corresponding information relayed to via the interconnection 30, the system 1 might also be configured to predict the presence of a user in each room 91a-d of the defined space 90 individually.

The scheduler 3 may switch the actual target temperature for controller 2 of the system 1 for controlling the temperature between a stand-by temperature and an actual presence temperature based on the predicted periods of presence. The "actual presence temperature" can be predefined by the user and represents the desired temperature of the user for the defined space whenever he is present. The actual presence temperature might be conditional on the time of day, since the user might prefer a lower temperature at night than during the day. Unless stated otherwise, in the following examples, the "actual presence temperature" is set to 20°C throughout the day. The "stand-by temperature" is a temperature or temperature range that requires less energy than keeping the actual presence temperature. The stand-by temperature in this example is set to "over 14°C" in order to prevent any mould formation.

The actual control rules of the controller 2 of the system 1 for controlling the temperature in the defined space 90 is now explained in view of figure 3. In figure 3, five examples A-E of the control rules are depicted by means of the predictions by the prediction module and the actual temperature of the defined space 90 during the course of a day.

In example A, the prediction module has recorded the actual periods of presence of a user based on the arming and disarming of the security system 20 for at least five days of a specific day of the week, e.g. for all Mondays of the last five weeks. This information is illustrated by the lines 100. From this information, the prediction module 4 is capable of determining predicted periods of presence of a user, illustrated by the box 101. According to this, the prediction module 4 predicts the user to usually leave the defined space 90, i.e. his flat, at around 7:30 on the respective day represented by the previously obtained empirical values with the actual periods of presence of a user. Accordingly, the prediction module 4 expects the user to return home at around 18:00.

During the predicted times of presence of a user, the target temperature of the defined space 90 is set to the actual presence temperature by the scheduler 3. The controller 2 of the system 1 for controlling the temperature controls the means for heating 10a-d in the defined space 90 in order for the actual temperature to equal the target temperature. The actual temperature is registered by the means 11a-d, 12 for measuring the temperature. The actual temperature in the defined space is depicted as line 102 in figure 3.

After the user has left the defined space as predicted, which is indicated by the arming of the security system 20, the target temperature of the system 1 is set to the stand-by temperature. In this example, the defined space cools down until the stand-by temperature is reached. Afterwards, the actual temperature is kept at the stand-by temperature level by the controller 2.

Before the user is expected to return home, the target temperature of the system 1 is once again set to the actual presence temperature. In order to accommodate for any warming-up periods, the target temperature is not set to the actual presence temperature at that time the user is actually expected to return home, but rather a specified warm-up period before that. This warm-up period is depicted as the dashed box 104 in figure 3 and allows the defined space 90 to warm up so that the actual presence temperature is already reached when the user actually returns home.

Example B is generally based on example A. Therefore, it is referred to the explanations above. However, Example B differs from example A in the fact that, on the day for which the actual temperature is depicted, i.e. the bottom one of the lines 100 representing the actual presence of the user, the user leaves the defined space 90 earlier than predicted, returns home for a short period during the day and returns home later than predicted in the evening.

In this case, the controller 2 sets the target temperature to the stand-by temperature before the predicted period of presence 101 ends in the morning in order to save energy. Since the leaving of the user is determined based on the arming of the security system, it can be assumed that the user will not return shortly.

The short period of presence of the user during the day is exceptional (cf. the recorded previous periods of presence as indicated by all but the bottom lines 100) and can thus not be predicted, the target temperature of the system 1 is set to stand-by temperature only at the time when the user actually returns home. However, as soon as the controller 1 registers the presence of the user based on the disarming of the security system 20, the target temperature is set to actual presence temperature. Even though the defined space 90 might then require some time to warm up to the desired temperature, the user does not need to actively interact with the temperature control to achieve this. Once the user leaves again, the controller 2 sets the target temperature to stand-by temperature again.

In the evening, the scheduler 4 once more sets the target temperature to the actual presence temperature based on the predictions by the prediction module 3 taking into account the warm-up period 104 so that the defined space 90 is heated to the actual presence temperature when the user returns home. Since the system 1 cannot predict the user to exceptionally return home later than usual, the scheduler 4 assumes the user to return home at the predicted time and ensures the measured temperature to meet the actual presence temperature at the predicted time. However, if the behaviour pattern of the user regarding the time of returning home in the evening of a specific day of the week changes permanently, the prediction by the prediction module 3 will be adapted correspondingly.

Example C shows a typical example of the control rules of the controller 2 for a Sunday. The user leaves the defined space 90 and returns home again at unpredictable time. In order to achieve a pleasant temperature for the user whenever he is at home, the target temperature remains at actual presence temperature during the whole day.

Example D is again based on example A. It is thus referred to the explanations above. In this example, the user exceptionally stays in for the whole day, for which the actual temperature is depicted, contrary to the prediction. However, since the controller 2 detects the presence of the user in the defined space, the target temperature of the system 1 remains at the actual presence temperature.

The controller 2 might detect said presence of the user by simply registering the non-arming of the security system 20 at the usual time. However, in order to distinguish an actual presence of the user from any non-arming the security system 20 through an oversight, the controller 2 might preferably rely on additional data from e.g. the camera 13 or the security sensors 21a-d, 22 in order to verify the actual presence of the user. If the user cannot be detected as present by these means, the controller 2 might assume the security system 20 accidentally not being armed and set the target temperature to the stand-by temperature nonetheless.

Example E is also based on example A. In this example, however, the user indicates via a user interface remotely accessed over a communication network 40 by means of a mobile phone 41 that he will exceptionally return home early on a specific day, thereby overriding the scheduler 3. The controller then sets the target temperature of the system 1 to the actual presence temperature taking into account the warm-up period before the announced return of the user. The point in time of this setting of the target temperature is depicted by cross 105.

In Example E, the actual presence temperature is also dependent on the time of day. During the night-time, i.e. after 21:30 and before 5:00, the actual presence temperature is set to 18°C as opposed to the other times, where it is set to 20°C.

There are numerous other examples of the control rules of the controller 2 according to the present invention that are readily apparent for the skilled person based on the examples A to E explained above.

Furthermore, it is possible that the controller 2 does not control the temperature of the defined space 90 as a whole, but for each room 91a-d individually, wherein the actual presence of a user might also be predicted individually for each room. For example, the user might usually not be present in the bedroom during the day. Therefore, the target temperature for the bedroom might be set to a stand-by temperature during daytime.

## Claims

1. System (1) for regulating the temperature within a defined space (90) comprising
- means for measuring the temperature (11a-d, 12) at one or more locations within said defined space (90),
- means for heating and/or cooling (10a-d) the defined space, and
- a controller (2) for controlling the heating and/or cooling means (10a-d) depending on the temperature measured by the temperature measuring means (11a-d, 12) and a target temperature,
wherein said controller (2) comprises
- a scheduler (3) that is configured to set said target temperature to either a stand-by temperature or an actual presence temperature depending on predicted periods of presence of a user in the defined space (90), and
- a prediction module (4) for calculating predicted periods of presence of a user based on empirical values of actual presence of a user, wherein at least part of said empirical values are obtained from monitoring the arming and disarming of a security system (20) monitoring said defined space (90).

2. System according to claim 1, wherein the controller (2) is configured to take into account the warm-up or cool-down period required from the stand-by temperature or the measured temperature to the actual use temperature so that the actual use temperature is reached at the beginning of a predicted period of presence.

3. System according to claim 1 or 2, wherein the system comprises one or more sensors (13) to detect actual presence of a person in the defined space (90) and the controller (2) is configured to adapt the target temperature based on the sensor data and/or to provide said sensor data as empirical values of actual presence of a user to the prediction module (4).

4. System according to claim 3, wherein the sensors (13) for detecting the presence of a person are coupled to the security system (20) in order to trigger an alarm when the presence of a person is detected and the security system (20) is armed.

5. System according to any one of the preceding claims, wherein the security system (20) is coupled to the controller (2) to relay any information on the presence of a person detected by sensors (21a-d, 22) of the security system (20) as empirical values of actual presence of a user whenever the security system is disarmed.

6. System according to any one of the preceding claims, wherein the controller (2) provides a user interface to manually override the scheduler and to set the target temperature to the stand-by temperature, the actual presence temperature or any other desired temperature.

7. Controller (2) for regulating the temperature within a defined space (90) comprising interfaces for connection with means for measuring the temperature (11a-d, 12) and means for heating and/or cooling (10a-d) to be situated within said defined space (90), wherein the controller (2) is configured to receive measured temperatures from the means for measuring the temperature (11a-d, 12) and to actuate the means for heating and/or cooling (10a-d) so that the measured temperatures meet a target temperature,
the controller (2) further comprising an interface for connection with a home security system (20) to at least receive information on the status of the home security system (20) in regard to its arming and disarming, a scheduler (3) that is configured to set the target temperature to either a stand-by temperature or an actual presence temperature depending on predicted periods of presence of a user in the defined space and a prediction module (4) for calculating predicted periods of presence of a user based on empirical values of actual presence of a user, wherein at least part of said empirical values are obtained from monitoring the arming and disarming of a security system (20) monitoring said defined space (90) via the respective interface.

8. Controller according to claim 7, wherein the controller (2) is configured to take into account the warm-up or cool-down period required from the stand-by temperature or the measured temperature to the actual use temperature so that the actual use temperature is reached at the beginning of a predicted period of presence.

9. Controller according to claim 7 or 8, wherein the controller (2) comprises interfaces for one or more sensors (13) to detect actual presence of a person in the defined space (90) and the controller (2) is configured to adapt the target temperature based on the sensor data and/or to provide said sensor data as empirical values of actual presence of a user to the prediction module (4).

10. Controller according to any one of the claims 7 to 9, wherein the controller (2) provides a user interface to manually override the scheduler and to set the target temperature to the stand-by temperature, the actual presence temperature or any other desired temperature.

11. Method for regulating the temperature within a defined space (90) comprising measuring the actual temperature in the defined space (90) and controlling means for heating and/or cooling (10a-d) the defined space (90) for the measured temperature to equal a target temperature, wherein the target temperature is set to an actual presence temperature or a stand-by temperature based on predicted periods of presence of a user in the defined state, wherein said prediction is based on the empirical values of actual presence of a user at least partly obtained from monitoring the arming and disarming of a security system (20) monitoring said defined space.

12. Method according to claim 11, wherein the warm-up or cool-down period required from the stand-by temperature or the measured temperature to the actual use temperature is taken into account so that the actual use temperature is reached at the beginning of a predicted period of presence.

13. Method according to claim 11 or 12, wherein the actual presence of a person in the defined space (90) is detected by means of sensors (13) and the target temperature and/or the predicted periods of presence of a user are adapted based on the the actual presence of a person.
